# EUROPEAN PATENT SPECIFICATION

(11) **EP 3 003 867 B1**
(45) Date of publication and mention of the grant of the patent: **18.10.2017**
(21) Application number: 14727803.0
(22) Date of filing: 28.05.2014
(51) Int. Cl.: B65B 9/14, B29C 63/42, B65C 3/06

(54) **DEVICE AND METHOD FOR SLEEVING CONTAINERS**
VORRICHTUNG UND VERFAHREN ZUM UMHÜLLEN VON BEHÄLTERN MIT EINER SCHLAUCHFÖRMIGEN FOLIE
DISPOSITIF ET PROCÉDÉ DE GAINAGE DE CONTENANTS

(30) Priority: 29.05.2013 NL 2010882
(43) Date of publication of application: 13.04.2016
(73) Proprietor: Fuji Seal International, Inc., Osaka-shi, Osaka 532-0003 (JP)
(72) Inventor: VAN RIJSEWIJK, Lucas, NL-5282 XN Boxtel (NL); HENDRIKS, Fred, NL-5764 RS De Rips (NL)
(74) Representative: Hylarides, Paul Jacques
(86) International application number: PCT/EP2014/061166
(87) International publication number: WO 2014/191514

(56) References cited:
- FR-A1- 2 603 019
- JP-A- S6 393 597
- US-A- 3 594 975
- US-A1- 2010 037 556
- US-A1- 2013 118 119

## Description

The present invention relates to a device and method for arranging sleeves around containers. The invention also relates to a spreading unit for a sleeving device.

Sleeving devices using a spreading element (for instance, a mandrel) and methods for arranging sleeves around containers are well known from prior art. For instance, reference is made to applications WO2011118105-A and WO2011031160-A in the name of the same applicant. The sleeving methods described in these applications involve feeding of a continuous strip of flattened tubular foil material wound around a foil supply reel towards a spreading element. The foil may be printed to form labels suitable for labeling the containers. The foil is arranged around the outer surface of a spreading element suspended from a stationary frame for spreading the foil from the closed (flattened) position to an open position, and the foil is cut by a cutting unit to provide a sleeve-like foil part. Then the sleeve-like foil part is arranged around a container that is transported by a container conveyor, allowing to form a labeled container, e.g. after heat shrinking the sleeve around the container.

Rollers can be provided on both the frame and the spreading element allowing the spreading element to be suspended while foil is transported between the respective rollers. During foil movement, the foil is located between rollers mounted on the frame and rollers mounted on the spreading element.

In the known sleeving device the spreading element is suspended from a frame in such a manner, that the sleeves are transported essentially vertically downward so as to arrange the sleeves in downward direction over a container passing beneath the spreading element. However, it may not always be possible to arrange a sleeve in a downward direction over a container, i.e. from the upper end of the container downward. For instance, in case of containers having a rim at their upper end, for instance food containers for maintaining liquids or similar products, and/or in case of conical containers the sleeving should be done from the bottom end of the container upwards.

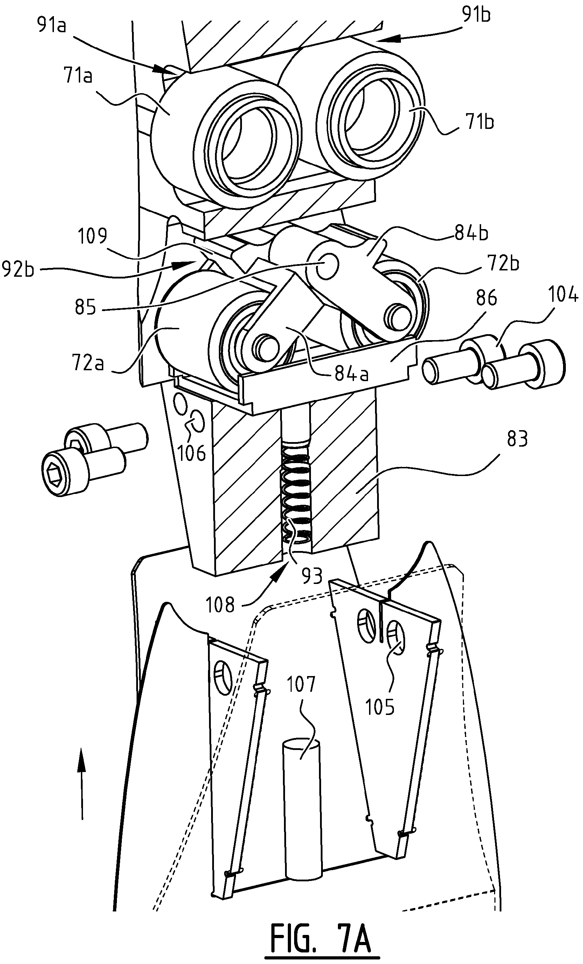

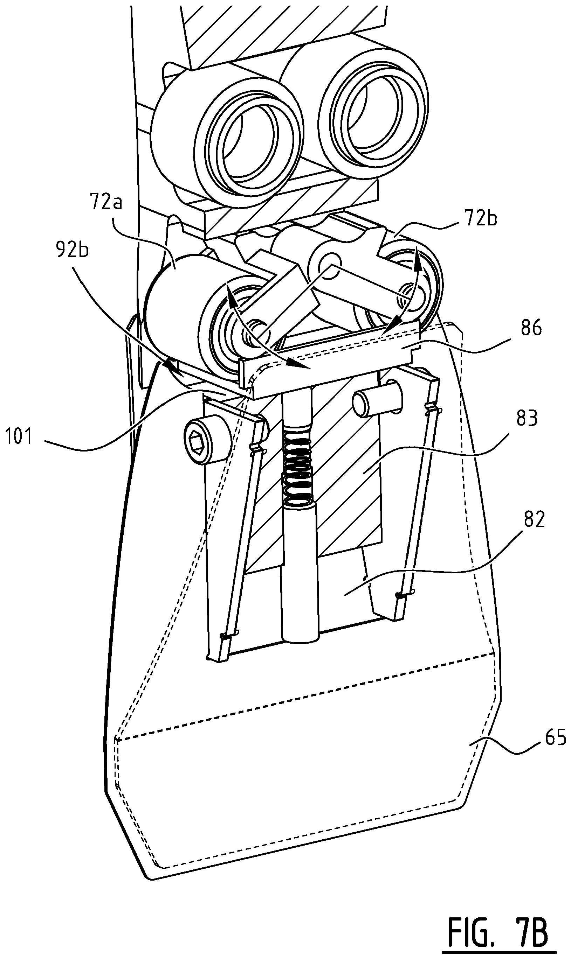

An example of such sleeving devices having a mandrel configured to transport sleeves in a downward direction is described in JP S63 93597 A. This document shows a mandrel comprising a set of outer rollers connected to a stationary frame and two sets of inner rollers connected to the mandrel. Each set of inner rollers comprises an upper roller and a lower roller. Referring to figure 7, both the upper roller and lower roller are fixedly (non-resiliently) mounted to the mandrel.

Another example of a sleeving device of the type wherein the sleeve is transported downward along a mandrel is given in US 3 594 975. The banding apparatus disclosed in this document is configured to open flattened flexible tubular material, cut the same to form sleeves and discharge the sleeves towards articles. The apparatus comprises an upper mandrel member and a lower mandrel member, the upper and lower mandrel member being held in a spaced and predetermined resilient relationship to one another by a support rod and a coil spring. The resiliency between the mandrel members may be varied by adjusting an adjustment nut. Mandrel rollers are fixedly mounted to the upper and lower mandrel element and a drive roller is arranged to abut the mandrel rollers. Adjusting of the adjustment nut causes a variation of the pressing contact between the drive roller and mandrel rollers.

The above-described sleeving devices are configured to transport the sleeves in a downward direction. However, sleeving devices are known as well which are adapted for arranging sleeves in upward direction around an array of containers passing a spreading element located below the container conveyor. The continuous strip of flattened tubular foil material wound around a roller would then be forwarded towards the spreading element, the strip would be opened by the spreading element for forming sleeves and the sleeves would be discharged in upward direction to be moved over the container, starting with the bottom end of the container. When a spreading element for discharging sleeves in a downward direction would be used in a sleeving device wherein the sleeves are discharged upwardly a number of problems would arise.

As foil is moved along the spreading element the spreading element has the tendency to (slightly) move along in the upward direction due to friction and downward again. This phenomenon is also known as a "bouncing mandrel". When the spreading element is bouncing while being suspended from the frame, the cutting quality of the cutting unit of the spreading element may deteriorate. The cutting unit may be a rotary cutter and comprise one or more knives. A bouncing spreading element may cause misalignment between the rotary cutter knives and the clearance in which the rotary cutter knives reside which may result in poor cutting quality and eventually even in damage to the knives of the cutting unit.

The suspension of the spreading element must be embodied in such a manner that a splice (i.e. connection between pieces of foil material from different foil supply reels) is able to pass over the spreading element. This means that not all of the support rollers may be in a fixed relationship with the frame rollers.

Furthermore, when the spreading element is suspended from the frame using a number of support rollers for supporting the spreading elements while allowing the foil to move along the rollers, the fold (herein also referred to as the "edges" of the foil material) in the flattened tubular foil should be removed or at least suppressed first before the fold reach the support rollers in order to reduce the risk of misalignment of the foil during movement of the foil along the spreading element and from the spreading element towards the container.

It is an object of the present invention to provide a device and method for sleeving containers and/or a spreading unit for use in such device and method wherein the above-identified and/or other disadvantages have been removed or at least reduced.

According to a first aspect at least one of these objects is achieved in a container sleeving device for arranging sleeves around containers conveyed on a conveyor, the sleeves being formed of flattened tubular foil material, the container sleeving device comprising:
- a spreading unit comprising a frame and a spreading element, wherein the spreading element is supported on the frame;
- a foil supply for supplying foil to the spreading element, the spreading element being configured to open the foil to form sleeves,
- transport elements for transporting the sleeves along the spreading element, the transport elements comprising:
   - a set of upper guide rollers and a set of lower guide rollers,
   - a set of frame rollers connected to the frame and arranged so as to transport the sleeve between the frame rollers and guide rollers;
   wherein
- the transport elements are configured for transporting the sleeves upward along the spreading element, the spreading element comprising a bottom part configured as a generally flat element, a top part configured as a generally cylindrical element and an intermediate part arranged between the bottom part and top part;
- the upper guide rollers are stationary guide rollers;
- the upper and lower guide rollers are arranged in the plane of the flat element of the bottom part, the upper guide rollers being located at a position above the lower guide rollers;
- the frame rollers are configured to transport the sleeve in upward direction, wherein the frame rollers are arranged below the upper guide rollers so as to support the spreading element on the frame and the lower guide rollers are resiliently mounted to the spreading element so that the lower guide rollers are pressed to their respective frame roller.

The lower guiding rollers pressing against respective frame rollers reduces the tendency of the spreading element to bounce up and down as a sleeve is moved upward along the outer surface of the spreading element.

The spreading element may be supported on the frame by suspending the spreading element from the frame. The upper guide rollers are stationary rollers, configured to rotate but in a fixed spatial relationship with the spreading element, so that the spreading element is suspended stably on the fixedly mounted rollers and the suspension of the spreading element may be simplified. The frame rollers, sometimes also referred to as drive rollers, may actually be driven, but in other embodiments at least some of the frame rollers are not-driven and are arranged to be freely rotatable as the foil material moves along the drive rollers.

In embodiments of the invention the lower guide rollers are arranged so as to be biased against the frame rollers, in the operational position. Due to the biasing force the folds formed in the flattened tubular foil material passing the lower guide rollers are at least partly removed before the foil material is transported upwardly by the frame rollers and upper guide rollers. The removal of the folds may increase the reliability of the sleeving process.

In an embodiment of the invention the lower guide rollers are supported by one or more resilient elements, wherein the resilient elements may be mounted to the bottom part and/or intermediate part of the spreading element.

In embodiments of the invention the lower guide rollers in combination with the associated frame rollers exert a pressure on the folds of the foil material. This pressure should be sufficiently high to enable the sleeving device to remove (or at least reduce) folds (or edges) present in the foil material forming the sleeves. The frame rollers and lower guide rollers then function as pressure rollers to smoothen the edges in the flattened foil material. In other embodiments of the invention the lower guide rollers work together with a different set of rollers which are not driven rollers. These rollers are also known as pletter wheels and may be pivotably mounted to the frame.

The combination of the frame rollers (which may either be driven or non-driven) and lower guide rollers enables removal of the fold in the flat tubular foil material supplied by the foil supply while the spreading element is being supported by the upper guide rollers. The fold is removed before it foil passes the upper guide rollers Removal of the foil enables (more) oversize during the sleeve application process, which may reduce the risk of damage to the sleeve and/or improve the shrink results. Furthermore, the risk of the foil material/sleeve to twist or rotate on the spreading element is reduced, thereby reducing the occurrence of application jams.

In embodiments of the invention the upper and lower guide rollers are arranged at the intermediate part of the spreading element. In other embodiments the upper guide rollers are arranged at the intermediate part and the lower guide rollers are arranged at the bottom part, while in still other embodiments the upper guide rollers and lower guide rollers are arranged in the bottom part of the spreading element.

The shape of the spreading element forces the foil material to transform from substantially flat to a substantially open shape to provide a sleeve that may be ejected towards a container.

In an embodiment of the present invention the frame rollers are arranged between the upper guide rollers and lower guide rollers in order to restrict movement of the spreading element in upward and downward direction. Downward movement restriction and upward movement restriction may be provided by the upper guide rollers and lower guide rollers, respectively. In case the lower guide rollers are biased against the frame rollers the lower guide rollers may provide for a restriction of the "bouncing" effect, in addition to or instead of the biased guide rollers downstream of the frame rollers.

In an embodiment of the invention the bottom part of the spreading element is detachable from the intermediate part of the spreading element. In detached position the intermediate and top parts of the spreading element may be moved upward to be able to remove them from the sleeving device, for instance for maintenance reasons. Once the intermediate part (and top part) of the spreading element have been placed (back) into the sleeving device and are supported on the frame rollers, the bottom part of the spreading element may be attached to the intermediate part. This enables a quick and easy removal of the spreading element from the frame and/or replacement of the spreading element.

In a further embodiment of the invention the lower guide rollers are movable between an operational position wherein the rollers extend from the surface of the spreading element and a retracted position wherein rollers partly or fully extend in a recess in the spreading element. This construction allows the device to be removed easily removed from the frame.

Generally, the frame rollers rotatably attached to the frame generally are in a fixed positional relationship with the operating position of the (guide rollers of the) spreading element. Because the lower guide rollers can be moved to a retracted position, the intermediate part of the spreading element (including the lower guide rollers) may be moved upward between the frame rollers, for instance to remove the spreading element from the sleeving device. Similarly, when the spreading element including the lower guide rollers are in the operational position, the lower guide rollers may remove the fold in the foil material supplied by the foil supply before the foil reaches the support rollers (formed by the upper guide rollers).

In an embodiment the lower guide rollers are pivotably mounted inside the spreading element. More specifically, the lower guide rollers may be mounted so as to move to the retracted position under the influence of gravity.

In an embodiment the lower guide rollers are arranged to be biased against the frame rollers in the operational position. The guide rollers may be biased against the frame rollers with a sufficient force so as to be able to at least partly remove the fold in the supplied foil material, while still allowing the lower guiding roller to move back to the retracted position when the intermediate part of the spreading element is moved upward so as to remove the spreading element from the sleeving device.

In a first embodiment opposing lower guide rollers are mounted to respective pivot arms. The pivot arms enable the lower guide rollers to be easily moved between their operational and retracted positions. In a further embodiment these pivot arms are mounted to a common central pivot axis (preferably provided at the vertical axis of symmetry of the spreading element) so that the opposing guide rollers can pivot (rotate) along one central point. Using one central pivot point allows for a relatively simple and accurate guiding of the lower guide rollers between their operational and retracted positions. The rollers need to be aligned accurately since even a small deviation in the position and orientation of the rollers may result in misalignment of the sleeves. For instance, this misalignment may cause the sleeve to rotate on the spreading element.

In a second embodiment an upper guide roller comprises a pivot axis mounted to the spreading element for pivotably supporting the upper guide roller. In this embodiment a lower guide roller may be mounted to a pivot arm, in turn mounted to the pivot axis of the upper guide roller. In this embodiment a central pivot point can be dispensed with and use is made of a pivot point of one of the wheels. This embodiment provides an accurate alignment of the wheels as well.

In embodiments of the invention the bottom part and intermediate part of the spreading element are configured to have the lower guide rollers move from the retracted position to the operational position by attaching the bottom part to the intermediate part. Once the spreading element has been placed on the frame, the bottom part is positioned on the intermediate part thereby pushing the rollers automatically upward. Furthermore, the bottom part may comprise a recess configured to accommodate the lower end of the intermediate part of the spreading element. As mentioned above, the guiding rollers, more specifically the lower guiding rollers, rollers in combination with the associated frame rollers function as pressure rollers for smoothing the edges formed in the foil material of the sleeve so as to remove or at least reduce the folds so that the sleeve may be given a sufficient amount of oversize relative to the spreading element to reduce the risk of damage to the sleeve and/or to improve the results of the shrink process performed downstream of the sleeving device.

In embodiments of the present invention the dimensions of the bottom part in the plane of the flat element diminish from the flat element upward towards the intermediate part. This may result in a reduced width of the spreading element at the connection between the bottom part and intermediate part. Additionally, in a further embodiment, the bottom part may widen in the upward direction towards the intermediate part in a direction perpendicular to the plane of the flat element. In the further embodiment the width is reduced and the thickness is in upward direction. In this manner the closed foil arriving at the flat element of the bottom portion may be gradually opened while traveling upward along the outer surface of the spreading element. The bottom part, intermediate and top part of the spreading element may be dimensioned so that they have an at least substantially constant circumference in the direction from the bottom part to the intermediate part or even from the bottom part to the top part of the spreading element. This enables the foil material to be opened gradually in a manner wherein the internal stress in the foil material can be maintained small.

In an embodiment the upper guide rollers comprise a running surface having a first width and the lower guide rollers a running surface with second width, wherein either the second width is larger than the first width or the first width is larger than the second width. In this way an over constraint situation can be avoided.

In embodiments of the present invention the transport elements comprise:
- a set of further guide rollers, arranged at the top part of the spreading element;
- a set of second frame rollers, arranged at a position above the position of the further guide rollers so to drive the sleeve between the second frame rollers and further guide rollers; wherein the second frame rollers are configured to exert on the further guide rollers a force having a downward force component.

The biasing force on the frame rollers increases the grip of the frame rollers on the sleeve. The biasing force in combination with the mutual positions of the frame roller and guiding roller creates a downward force for suppressing bouncing movements of the spreading element.

More specifically, a frame roller exerts a force on a guide roller that has a horizontal inward force component pressing the frame roller against the frame roller proving grip on the foil material to transport the foil material in upward direction and at the same time a vertical downward force component pushing the guide roller downward, thereby preventing or at least reducing the bouncing effect.

In embodiments of the invention the frame rollers are positioned in the upper or intermediate part of the spreading element, in a plane of the flat element of the bottom part. Alternatively or additionally, in other embodiments, the frame rollers are the discharge rollers positioned in the uppermost part of the spreading element, which discharge rollers are configured for discharging (shooting) the sleeve towards containers passing by the spreading element.

In embodiments of the invention both the upper and lower guide rollers are arranged at the intermediate part of the spreading element. When the bottom part is detached from the intermediate part the intermediate part can be removed easily from the support frame by sliding the pivotable lower guide rollers along the frame rollers. In other embodiments the upper guide rollers are arranged at the intermediate part and the lower guide rollers are arranged at the bottom part. Once the bottom part has been detached from the intermediate part, the intermediate can be freely guided along frame rollers and removed from the support frame. In this embodiment the bottom part may be spring mounted to the intermediate part. Even if the lower guide rollers were fixedly mounted to the bottom part (instead of in a pivotable manner), the lower guide rollers could then be biased against the frame rollers to provide a suitable pressure on the foil material for removing the folds therein.

The above discussed transport elements may be provided with orientation elements for orienting the spreading element in the sleeving device. For instance, the orientation elements may comprise at least one ridge formed on the first frame rollers, which ridge may engage in the upper and/or lower guide rollers.

In embodiments of the invention a frame roller is positioned to drive both the associated upper and lower guide roller. In further embodiments the frame rollers and guide rollers are positioned to hold the foil between their running surfaces and to force the foil in an upward direction. The frame rollers are driven by a suitable drive (not shown), for instance one or more electric motors, while the guide rollers are driven by the rotation of the frame rollers. Since all rollers in contact with the foil may be driven (directly or indirectly), all rollers can be given a suitable speed for transporting the foil (sleeves) upward. In case the rollers would not be driven, inertia of the guide rollers may make it difficult for the rollers to "follow" the foil material transported along the spreading unit.

According to another aspect of the present invention a spreading unit is provided. The spreading unit is configured to open a foil transported along the spreading unit to form sleeves. The spreading unit may comprise:
- a spreading element comprising a bottom part configured as a generally flat element, a top part configured as a generally cylindrical element and an intermediate part arranged between the bottom and top part;
- transport elements for transporting a supplied sleeve towards the top end of the spreading element, the transport elements comprising a set of upper guide rollers and a set of lower guide rollers, both the lower and upper guide rollers being arranged in the plane of the flat element of the bottom part, the upper guide rollers being located at a position above the lower guide rollers;
wherein an upper and lower guide roller are positioned to receive between them a frame roller arranged to transport the foil along the spreading element while supporting the spreading element in the sleeving device, wherein the lower guide rollers are resiliently mounted to the bottom part and/or the intermediate part so that, in an operational position, the lower guide rollers are pressed to their respective frame roller.

The pressing of the lower guide rollers against the frame rollers is performed to at least partly remove the folds formed in the flattened tubular foil material passing the lower guide rollers.

According to still another aspect of the present invention a method of arranging sleeves around containers conveyed on a conveyor is provided. The method may compress supplying foil to a spreading unit of a container sleeving device as defined herein, opening the foil to form a sleeve by transporting the foil upward along the outer surface of the spreading unit and discharging the sleeve upward to a container passing the spreading unit so as to arrange the sleeve around the container.

Further characteristics of the present invention will be elucidated in the accompanying description of various preferred embodiments thereof. In the description reference is made to the annexed figures, that show:
Figure 1 a schematic overview of a sleeving system according to an embodiment of the present invention;
Figure 2 a front view of an embodiment of the spreading unit and transport elements;
Figure 3 a side view of the embodiment of figure 2;
Figure 4 a bottom view of the embodiment of the figures 2 and 3;
Figure 5A a schematic representation showing the arrangement of the further guiding rollers and frame rollers in accordance with an embodiment of the present invention;
Figure 5B a schematic representation of the forces exerted on the spreading element of figure 5A;
Figure 6 an elevational view of the embodiment of figures 1-3;
Figure 7A an exploded view, partly cut away, of a portion of the spreading element of figure 6, with the lower guide rollers in retracted position;
Figure 7B the view of figure 7B, with the lower guide rollers in extended position; and
Figure 8 an elevational view, partly cut away, of another embodiment of the present invention.

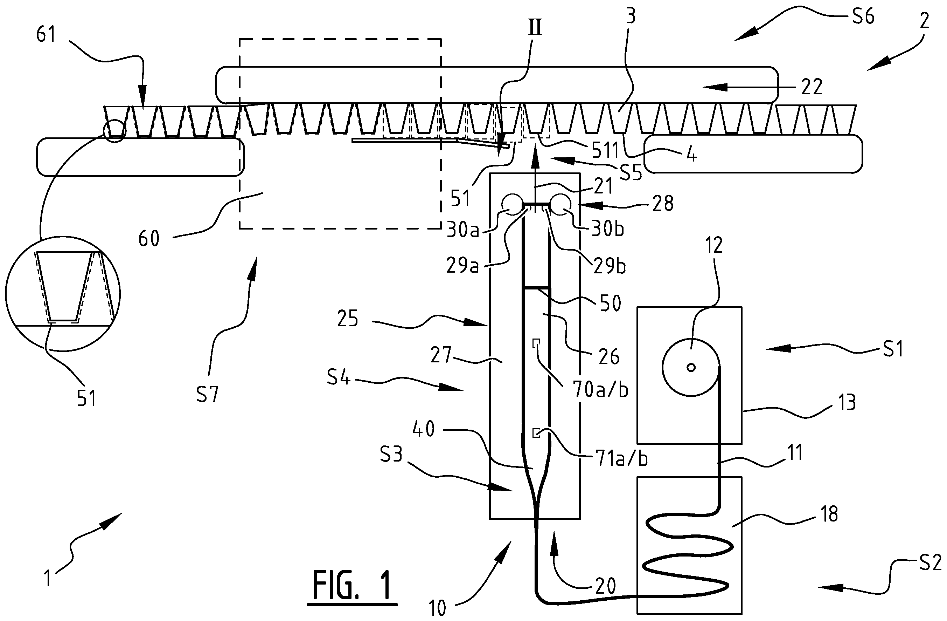

Figure 1 schematically shows an embodiment of a sleeving system 1 for sleeving and labeling containers. The sleeving system 1 comprises a conveyor 2 for conveying one or more parallel rows of containers 3, for instance food containers and the like, in a direction 22 along a sleeving position at which sleeves are arranged around the containers. Embodiments of the conveyor may comprise wires supporting a top rim of the container to allow the transport of the containers. However, other types of conveyors may be employed as well. In fact, conveyor 2 may be any type of conveyor capable of transporting an array of containers along the sleeving position. An example of a conveyor suitable for this purpose is a vacuum conveyor that holds the containers using a vacuum source.

In the embodiment shown in figure 1 the containers 3 are suspended from the conveyor 2 in such a manner that the bottom ends 4 of the containers "hang free". The conveyor 2 may be configured to transport the containers 3 in a discontinuous manner (i.e. intermittently). In preferred embodiments, however, the conveyor is arranged to transport the containers in a continuous manner (i.e. non-intermittently). In these embodiments the operation of arranging of sleeves around the container is performed on the fly and essentially without interrupting the transport of the containers.

Figure 1 also shows a sleeving device 10 arranged at the sleeving position and configured to arrange sleeves around containers transported by the conveyor 2. As mentioned above, sleeves are formed by cutting a continuous strip of foil material configured as a flattened tube or envelope at a suitable length. In the present application "sleeve" may be used as an indication for the individual pieces of foil that are arranged around products, but may equally well refer to the foil or strip forming a flattened or opened tube before it is cut.

Flattened tubular foil material 11 wound on a supply reel 12 is caused to move along a spreading element 26, herein also referred to as the "mandrel", that spreads the flattened foil material to an "open" position and cuts the foil material to a specific length so that foil material forms consecutive sleeves. A sleeve is sized to be arranged around the container. Securing the sleeve to the container may involve gluing or a heat shrinking process.

More specifically, according to embodiments of the invention, the sleeving system 1 may comprise a sleeve supply for supplying a continuous strip of sleeve-like foil material to the sleeving device 10. The sleeve supply comprises a foil stock 13 in which one or more of the above-mentioned supply reels 12 are arranged. On each of the supply reels 12 a continuous strip of sleeve-like foil material has been wound. The strip of foil material can be introduced into the sleeving device 10 by any suitable means, for instance several sets of wheels or rollers (not specifically shown in the figures). The foil material of a selected one of the supply reels 12 is transported (S1) towards a foil buffer 18. The foil buffer is arranged to allow for variations in operating speed of the device without the need to interrupt the sleeving process. In an embodiment a splicer is used in step S1 to connect a new strip of foil material from a further roll to the end of strip of foil material of an old reel to allow for a continuous feed of foil to the sleeving device 10.

More specifically, the foil fed to buffer 18 allows buffering (S2) of foil e.g. when a reel 12 is replaced, to provide a continuous supply of foil (direction 20) to the downstream applications such as the illustrated stationary spreading unit 25 of the sleeving device 10.

The sleeving device 10 comprises a spreading unit 25 for spreading the strip of foil (which initially has a flattened tubular form) to an open position. The spreading unit 25 comprises a frame 27 in which a spreading element 26 is suspended. The spreading unit also comprises a discharge unit 28 for shooting sleeves cut from the strip of foil material towards the containers passing by the spreading unit 25. The spreading element 26 is shaped to open the foil 11 delivered as a flat envelop of foil material into a tubular envelope or sleeve shape. More specifically, as the flattened tubular foil is guided along the spreading element 26 in an essentially upward direction 20, the foil is opened (S3) by the spear or tip 40 of the spreading element 26.

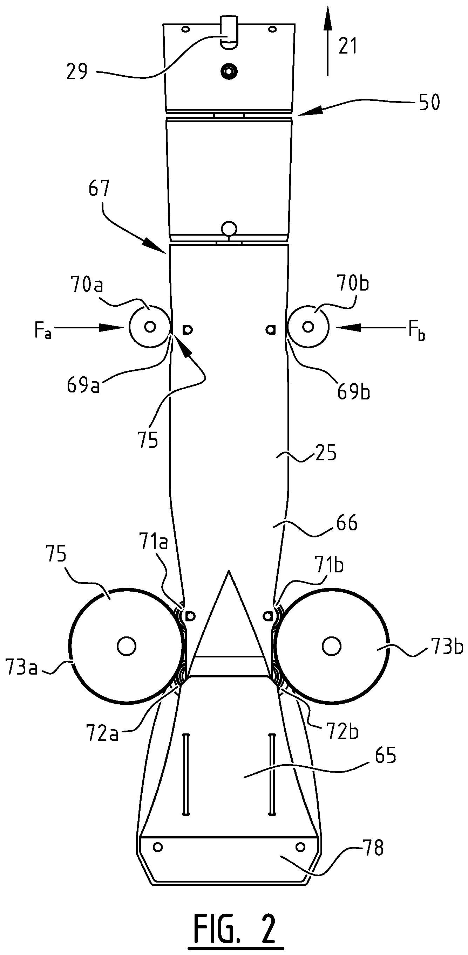

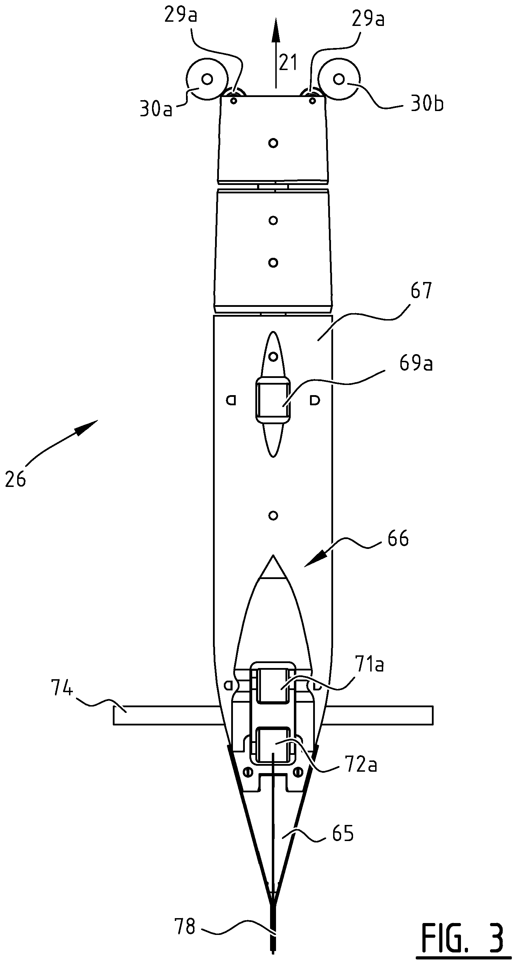

Referring to figures 2-4, the sleeving device 10 further comprises a cutting unit 50 for cutting (S4) of sleeves 51 from the supplied opened foil material. The foil material may be guided past the cutting means unit for cutting the foil material at certain intervals so as to obtain individual sleeve-like foil envelopes or sleeves 51 of a suitable length.

The discharge unit 28 may comprise a number of guiding wheels or rollers 29a,29b provided on the spreading element 26 and drive wheels or rollers 30a,30b rotatably mounted at the frame 27 of the spreading unit 25. The guiding wheels 29a,29b and drive wheels 30a,30b work together to impart on the sleeves 51 an acceleration in the upward direction 21 so that the sleeves may be ejected in the direction of a container 3 positioned above the spreading element 26.

In the configuration shown in figure 1 the containers 3 have a generally tapering shape, i.e. near a top end the container essentially has a larger cross-section than at bottom end of the container. The container may have a frusto-conical shape as is shown in the figures, but other shapes are possible as well. A container 3 may have an opening near a top side that may be closed by a removable seal. In some embodiments a container has a rim (not shown in figure 1) so as to facilitate maintaining the container in a suitable upright position. The containers may be empty or may have previously been filled with content, such as food. It is clear that the system and method according to the present invention may equally well be applied to differently shaped containers. Furthermore, the containers (herein also referred to as "cups") may be transported one by one, for instance in one or more rows of containers. In other embodiments the containers may be combined into a number of container assemblies, each container assembly comprising more than one container or cup.

Furthermore, according to embodiments of the invention, the containers should be kept in an upright position wherein relatively wide top end of the container extends above the relatively small bottom end of the container, for instance in case of thermoformed plastic containers or cups for storing food or a similar content. These containers or cups should not be rotated upside down and should be maintained in the upright position throughout the entire sleeving process.

As described above, the discharge unit 28 in the shown embodiment comprises two rotatable guiding wheels 29a,29b and two rotatable driven drive wheels 30b for physically engaging the cut sleeve 51, accelerating the sleeve and shooting (S5) the sleeve from the spreading element 26 to a position wherein the sleeve is arranged around the container 3. A suitable controller is arranged to operate the discharge unit 28 and the conveyor 2 to synchronize the ejecting with the movement of the containers transported on the conveyor 2. More specifically, a suitable controller is arranged to synchronize the ejection, container supply, cutting and other method steps.

Once the a sleeve 51 has been formed by the cutting unit 50, ejected towards the container by the discharge unit 28 and arranged around the container by having the sleeve slide upwardly along the bottom end 4 of the container 3, the combination of sleeve 51 and container 3 is conveyed (S6) further in direction 22 by conveyor 2. Conveyor 2 transports the sleeved containers further downstream, e.g. into a heated steam oven 60 (schematically shown in figure 1). In the oven 60 the sleeve 51 may be heat shrunk (S7) so that the sleeve 51 is attached to the container 2, providing a labeled container 61. In a subsequent step a drying process can be applied.

Advantages of a system set up according to figure 1 are high speed, accuracy, reliability and reduced space. Not only sleeves are provided at high speed using the ejection unit, but also the heat shrinking in the oven is executed quickly, limiting the actual heating of the container that could already contain the product such as a dairy product. The illustrated system also allows handling of thin foils of less than 60 µm.

Figures 2-4 show a first embodiment of the spreading unit 25 of figure 1 in more detail. The spreading unit 25 comprises a spreading element 26 configured for opening sleeves and ejecting the same in an upward direction. The spreading element 26 comprises a bottom part 65 having at the bottom end a generally flat element 78, a top part 67 configured as a generally cylindrical element and an intermediate part 66 arranged between the bottom and top part. The bottom part 65 is widened at least in the plane perpendicular to the plane of the flat continuous strip of foil material 11. This causes the foil material moving upwardly along the bottom part 65 to be opened.

The intermediate part 66 of the spreading element 26 comprises in the plane of the generally flat element 71 of the bottom part 65 (i.e. in the plane of the generally flat tubular foil material) stationary transport elements for transporting the foil material upwardly. The transport elements comprise several sets of rotatable guiding wheels or rollers. More specifically, in the shown embodiment, the intermediate part 65 comprises a pair of opposing upper guiding rollers 71a,71b and a pair of opposing lower guiding rollers 72a,72b. Furthermore, a set of opposing (first) frame rollers 73a,73b is connected to the frame 27. The frame rollers 73a,73b can be driven by a drive unit, for instance comprising one or more electric motors (not shown) for rotating a rotation axis 74. In other embodiments the frame rollers are non-driven rollers. The frame rollers 73a,73b are arranged at a position between the upper and lower guide rollers 71,72. The frame rollers 73 in combination with the guiding rollers 71,72 together engage the foil material and transport the foil material held in between these rollers in an upward direction 21. The upper guiding rollers 71a,b act as support for the spreading element 26. The spreading element 26 rests with the upper guiding rollers 71a,71b on the first frame rollers 73.

The lower guiding rollers 72a,72b are mounted on the spreading element 26 at a lower position than the upper guiding rollers 711,b. The lower guiding rollers are arranged to flatten the two folds in the strip of foil material by pressing the strip between their circumferential outer surface and the outer surface of the frame rollers 73a,73b. This causes the fold in the foil material to be flattened before it passes the support rollers (i.e. the upper guide rollers 71a, 71b).

The strip of foil material is caused to move further along the spreading element. In order to obtain an adequate orientation of the spreading element 26 in the frame and to further advance the sleeve along the outer surface thereof, the spreading element 26 is provided with a set of opposite further guide rollers 69a,69b, which further guide rollers are likewise disposed in slots or recesses 75 in the spreading element 26. Opposing further guiding rollers 69a,b are mounted on the spreading element 26 in the same plane as the guiding rollers 71,72 and opposing drive rollers 70a,70b mounted on the frame of the spreading unit 25 are provided to transport the foil material further. The drive rollers 70a,b are arranged at the frame in such a manner, that a lateral force is exerted on the frame roller and thereby on the guide rollers 69a,69b to provide a good grip of the drive/guide rollers on the foil material.

At the upper end of the top part 67 of the spreading element 26 a pair of opposing discharge rollers 29a,29b are mounted. The rollers 29a,29b are arranged in the plane perpendicular to the plane of the essentially flat element 78 of the bottom part 65. The opposing discharge rollers together with a pair of discharge driven frame rollers 30a,30b act to accelerate the sleeve and eject the same towards the container passing above the spreading element. The top part 67 may have a circumference smaller than the circumference of the intermediate part 66 so that transport of the sleeve 51 is not hindered in this manner. In other embodiments the top part may have a similar or exact the same circumference than the intermediate part.

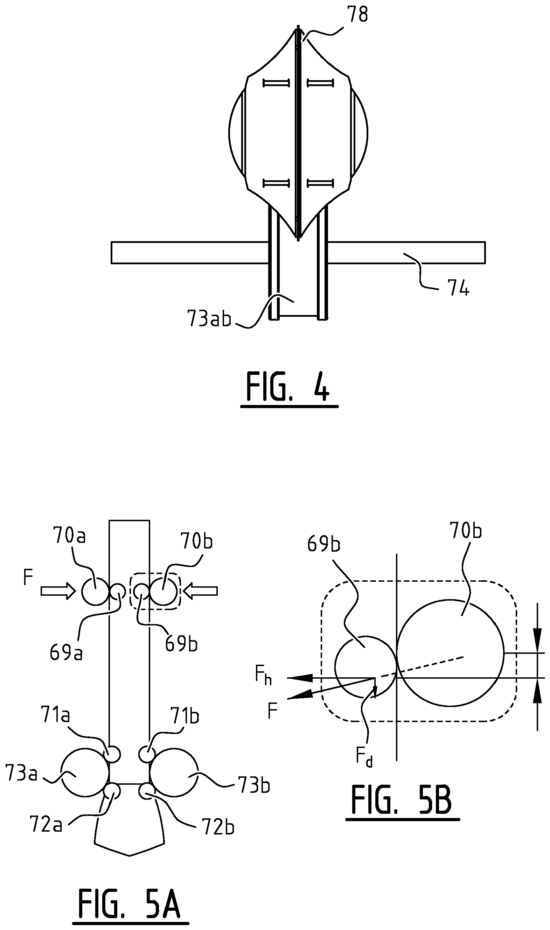

The guide rollers 69a,69b and drive rollers70a,70b may be arranged at substantially the same height so that the sleeve formed by the opened foil material is driven by the rollers in upward direction. The lateral force biasing the drive rollers 70a,70b to respective guide rollers 69a,69b are essentially only directed at providing an improved grip, as mentioned above. Referring to figure 5, in other embodiments, however, the drive rollers 70a,70b are arranged at a position somewhat higher than the respective guiding rollers 69a,69b. Furthermore, an external lateral force (F) may be exerted by the drive rollers 70a,70b on the respective guiding rollers 69a,69b, not only to increase the grip of the drive rollers 70a,70b on the guiding rollers 69a,69b (i.e. to provide a suitable horizontal force component Fₕ), but also to provide a downward force component F_{d}. The downward force components (F_{d}, figure 5B) pushes the spreading element 26 downward into the support wheels (i.e. frame wheels or rollers 73a,73b and guide rollers 71a,71b) of the spreading unit 25. The downward force suppresses any tendency the spreading element 26 may have to bounce under the influence of friction caused by the sleeve traveling upward along the spreading element. This may result in a better cutting quality and/or may avoid damage to the knives during the cutting operation of the cutting unit 50.

Although this is not shown in the figures, the frame rollers may be provided with orientation elements, such as ridges or the like, for precisely orienting and fixing the spreading element 26 in the correct orientation of the device. The orientation elements may to that end form part of the discharge means and, for example, comprise a ridge formed on the frame rollers 73a,73b, which ridge engages in a groove (not shown) formed in the circumferential surface of the guide rollers 71a,71b, respectively. This makes it possible to realize a correct fixation and orientation of the spreading element 26 in the device, whilst also the exchanging of the spreading element 26 can be carried out quickly and without any additional adjustments, and thus without unnecessary loss of time.

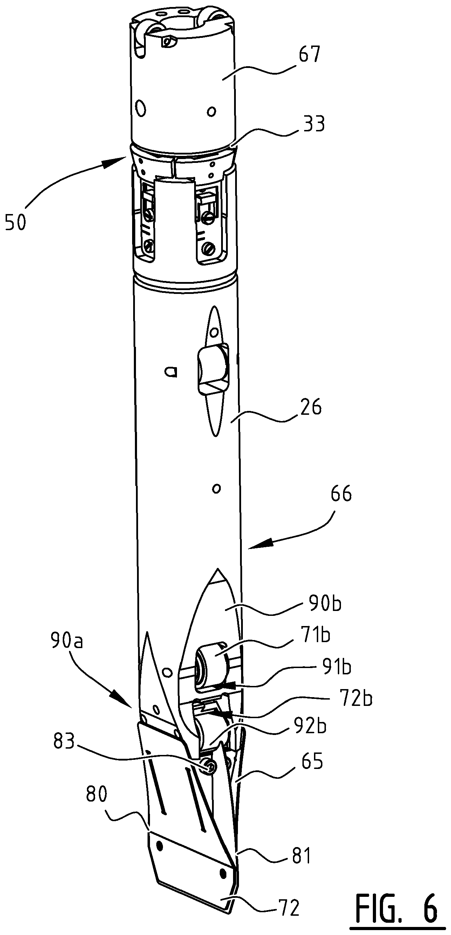

Figures 6 and 7 show one of the embodiments of the spreading unit 25 in more detail. Figure 6 shows a spreading element 26 comprised of a top part 67 and intermediate part 66 and a bottom part 65. The bottom part 65 comprises a generally flat element 78. More specifically, the bottom part 65 is configured as a flat element having edges 80, 81 and functioning as an inlet side for the sleeve-like foil material 11 which is supplied by the foil supply in a flat orientation. To open the individual flat sleeve-like foil the thickness of the bottom part 65 increases as the foil material advances in an upward direction. In other words, the bottom part 65 of the spreading element 26 widens from the flat element 78 of the bottom part 65 towards the intermediate part 66 in a direction perpendicular to the plane of the flat element 78 (and consequently also of the flat sleeve-like foil material). Furthermore, the bottom part 65 is so constructed that it narrows towards the intermediate part, seen in the plane of the flat element portion. This is illustrated by means of the upper part of the edges 80 of the flat element sector 1 which edges have a curved but inwardly extending construction. More specifically, in certain embodiments, the bottom part 65 of the spreading element 26, optionally also the intermediate and/or top part thereof, are constructed so that it has a substantially constant circumference, at least in the upward direction. This configuration of the bottom part 65 makes it possible to realize an efficient deformation of the foil material 2 and opens sleeve of foil material, which is ready to be arranged around a container. In the material of the sleeve a low level of material stress may be maintained.

Referring to the embodiment shown in figures 7A and 7B, the bottom part 65 (shown in figure 7A in a detached or disconnected position) is provided with a central recess 82 to accommodate a similarly formed projection 83 formed at a movable actuator 86 provided in the bottom end of the intermediate part 66 of the spreading element 26. The projection makes it possible to releasably connect or couple the bottom part to the intermediate part. The bottom part 65 can be fixed to the intermediate part 66 by the suitable means, for instance screws 104 that may arranged in the openings 105,106.

The intermediate part 66 is in the plane of the essentially flat element 78 of the bottom part 65 provided with opposing recesses 90a, 90b. In these recesses 90a, 90b openings 91a,91b and 92a,92b are provided to accommodate the earlier-described rollers 71a, 71b and 72a, 72b, respectively. The rollers 71a, 71b are stationary rollers rotatably mounted in the recess 91a,91b in such a manner that the roller partly extends beyond the surface of the respective recess 90a, 90b. In the embodiment shown in figure 6, the lower guiding rollers 72a, 72b are not mounted stationary. The rollers 72a,72b are rotatably mounted on respective arms 84a, 84b. Both arms 84a, 84b are pivotable with respect to a center pivot axis 85 so that the wheels or rollers 72a, 72b may swing inwardly and outwardly between a retracted position wherein the wheels are retracted to a position at least partially or fully inside the respective openings 92a, 92b (figure 7A) and an operational position (shown in figure 7B) wherein the wheels 72a, 72b extend more outside the spreading element.

When the bottom part 65 is removed from the intermediate part 66 the rollers 72a, 72b can swing freely around the centre axis 85. The rollers 72a, 72b swing downward automatically under the influence of gravity towards the retracted position wherein they do not extend outside the surface of the spreading unit 25 or at least extend only to limited extent from the surface of the recesses 90a, 90b.

When the bottom part of 65 is removed from the intermediate part 66 and the lower guide rollers 72a, 72b are in the retracted position, the intermediate part of the spreading unit may be removed easily from the frame 27 by simply moving the intermediate part 66 upward. Since the lower guide rollers 72a,72b are retracted, the frame rollers 73a,73b may pass the openings 92a,92b, respectively.

When the spreading element 26 and more specifically the intermediate part 66 thereof is placed back into the frame 27 (fig. 1) the bottom part 65 of the spreading element 26 can be coupled to the intermediate part by moving the same upwardly so that the projection 83 is received inside the recess 82 of the bottom part 65. A protruding portion 107 at the bottom of the recess 82 is formed so as to move upwards inside a channel 108 formed in the projection 83 of an actuator 86. Inside the channel 108 a coil spring 93 has been arranged. Once the bottom part 65 is coupled to the intermediate part 66, the rollers 27a, 27b are caused to move from the retracted position (figure 7A) towards the operational position (illustrated in figure 7B). A stop 109 is provided to restrict the freedom of movement of the wheels 72a,72b in the upward direction. Under the influence of the coil spring 93 the actuator 86, and hence the flat plate-like element, is urged to move upwardly, thereby swinging the arms 84a,84b of the wheels 72a,72b against the gravitational force from the retracted position to the operational position. The coil spring 93 then biases the lower guide rollers 72a,72b against the frame rollers 73a,73b.

Depending on the spring force the lower guide rollers 72a, 72b may be able to reduce the earlier described tendency of the spreading element 26 to bounce up and down when a sleeve is travelling upward. The reduction of the bouncing movement by the biased lower guide rollers 72a,72b can be accomplished in addition to or as an alternative for the earlier described bouncing reducing structure of the further rollers 69a, 69b and drive rollers 70a, 70b.

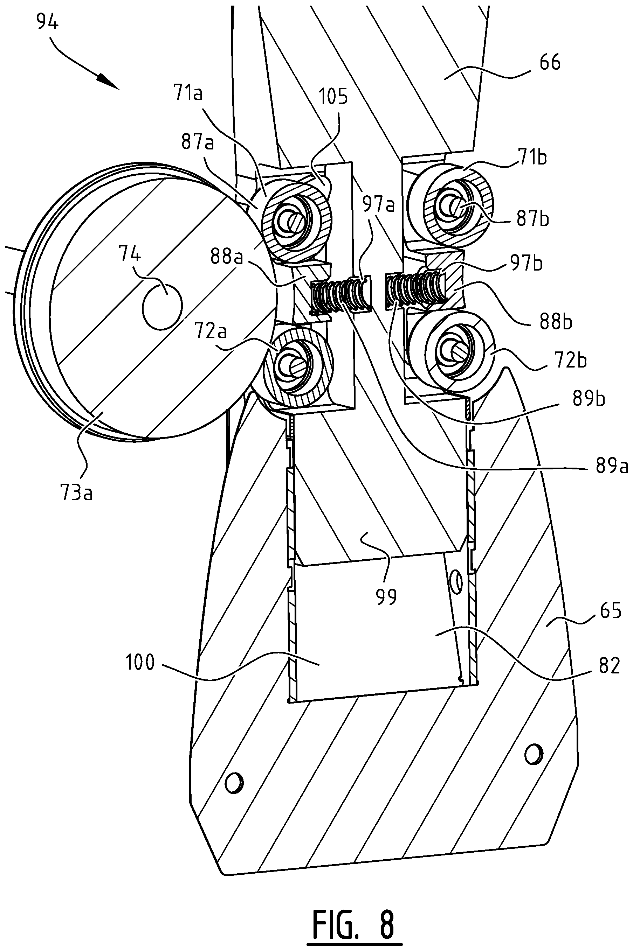

Figure 8 shows an alternative embodiment of a portion of the spreading unit 94 according to the invention. In the further embodiment the upper guiding rollers 71a and 71b are stationary rollers rotatably mounted to the intermediate part 66 of the spreading element. The rotation axes 87a, 87b of the guiding rollers 71a, 71b function as pivot axis for respective arms 88a, 88b to which the lower guiding rollers 72a, 72b are rotatably mounted. The respective arms 88a and 88b are forced to an outward (operational) position due to the presence of respective springs 89a, 89b provided respective recesses 97a,97b in the spreading element. The springs 89a, 89b provide a bias force urging the lower guiding rollers 72a, 72b to the operational position (shown in figure 8). When, however, the bottom part 65 of the spreading element is removed from the intermediate part 66 by sliding the projection 99 out of the recess 100, the intermediate part 66 can be moved upwardly. During the upward movement of the intermediate part 66 (and therefore also the lower guide rollers 72a,72b), the lower guide rollers 72a,72b are pressed from the operational position to the retracted position by the frame rollers 73a,73b. This enables the frame rollers 73a,73b to pass the lower guide rollers so that the intermediate part 66 may be removed from the frame of the spreading unit 25.

In the embodiments depicted in the figures guiding rollers are components which are arranged on a single constructional part (i.e. the intermediate part 66). This means that proper alignment of the rollers can accomplished easily. However, the present invention is not limited to this construction and in other embodiments, not specifically shown in the figures, the guiding rollers have been arranged on one or more different parts 65,66,67 of the spreading element of the spreading unit.

The present invention is not limited to the embodiments thereof described herein. The rights sought are defined by the following claims, within the scope of which numerous modifications can be envisaged.

## Claims

1. Container sleeving device (10) for arranging sleeves (51) around containers (3) conveyed on a conveyor (2), the sleeves being formed of flattened tubular foil material (11), the container sleeving device comprising:
- a spreading (25) comprising a frame (27) and a spreading element (26) wherein the spreading element is supported on the frame;
- a foil supply (12) for supplying foil to the spreading element, the spreading element being configured to open the foil to form sleeves,
- transport elements for transporting the sleeves along the spreading element, the transport elements comprising:
- a set of upper guide rollers (71a, 71b) and a set of lower guide rollers (72a, 72b),
- a set of frame rollers (73a, 73b) connected to the frame and arranged so as to transport the sleeve between the frame rollers and guide rollers
**characterized in that**
- the transport elements are configured for transporting the sleeves (51) upward along the spreading element (26), the spreading element comprising a bottom part (65) configured as a generally flat element (78), a top part (67) configured as a generally cylindrical element and an intermediate part (66) arranged between the bottom part and top part;
- the upper guide rollers (71a, 71b) are stationary guide rollers;
- the upper (71a, 71b) and lower (72a, 72b) guide rollers are arranged in the plane of the flat element of the bottom part, the upper guide rollers being located at a position above the lower guide rollers;
- the frame rollers (73a, 73b) are configured to transport the sleeve in upward direction, wherein the frame rollers are arranged below the upper guide rollers (71a, 71b) so as to support the spreading element on the frame (27) and the lower guide rollers (72a, 72b) are resiliently mounted to the spreading element so that the lower guide rollers are pressed to their respective frame roller (73a, 73b)

2. Container sleeving device (10) as claimed in claim 1, wherein the lower guide rollers (72a, 72b) are supported by resilient elements and/or are arranged to remove the folds formed in the flattened tubular foil material passing the lower guide rollers before the foil material is transported by the combination of frame rollers and upper guide rollers in upward direction and/or wherein the lower guide rollers in combination with the associated frame rollers (73a, 73b) exert a pressure on the folds of the foil material.

3. Container sleeving device (10) as claimed in any of the preceding claims, wherein the frame rollers (73a, 73b) are arranged between the upper guide rollers and lower guide rollers to restrict movement of the spreading element in upward and downward direction.

4. Container sleeving device (10) as claimed in any of the preceding claims, wherein the lower guide rollers (72a, 72b) are movable between an operational position wherein the rollers extend from the surface of the spreading element (26) and a retracted position wherein rollers partly or fully extend in a recess in the spreading element, wherein the lower guide rollers are preferably pivotably mounted inside the spreading element.

5. Container sleeving device (10) as claimed in any of the preceding claims, wherein the lower guide rollers (72a, 72b) are arranged to be biased against the frame rollers (73a, 73b) in the operational position and/or
wherein the lower guide rollers are spring mounted so as to urge the rollers to the operational position and/or wherein opposing lower guide rollers are mounted to respective pivot arms, the pivot arms preferably being mounted to a common central pivot axis.

6. Container sleeving device (10) as claimed in any of the preceding claims, wherein an upper guide roller (71a, 71b) comprises a pivot axis mounted to the spreading element for pivotably supporting the upper guide roller and wherein a lower guiding roller (72a, 72b) is mounted to a pivot arm (84s, 84b), the pivot arm being mounted to the pivot axis (85) of the upper guide roller, preferably comprising a resilient element, for instance a spring, arranged between the pivot arm and the spreading element.

7. Container sleeving device (10) as claimed in any of the preceding claims, wherein the bottom part (65) is detachable from the intermediate part (66) of the spreading element (26) and/or wherein the bottom part (65) comprises a recess configured to accommodate the lower end of the intermediate part (66) of the spreading element (26) and/or wherein the lower guide rollers (72a, 72b) are mounted so as to move to the retracted position under the influence of gravity and/or to move from the retracted position to the operational position by attachment of the detachable bottom part (65) to the intermediate part (66) of the spreading element.

8. Container sleeving device (10) as claimed in any of the preceding claims, the upper guide rollers (71a, 71b) comprising a running surface having a first width and the lower guide rollers comprising a running surface having a second width, wherein either the second width is larger than the first width or the first width is larger than the second width.

9. Container sleeving device (10) as claimed in any of the preceding claims, wherein the transport elements comprise:
- a set of further guide rollers (69a, 69b), arranged at the top part of the spreading element (26);
- a set of second frame rollers, arranged at a position above the position of the further guide rollers (69a, 69b) so to drive the sleeve between the second frame rollers and further guide rollers; wherein the second frame rollers are configured to exert on the further guide rollers a force having a downward force component.

10. Container sleeving device (10) as claimed in any of the preceding claims, wherein the upper (71a, 71b) and lower (72a, 72b) guide rollers are arranged at the intermediate part (66) of the spreading element (26), or wherein the upper guide rollers are arranged at the intermediate part (66) and the lower guide rollers are arranged at the bottom part (65) or wherein the upper guide rollers and lower guide rollers are arranged in the bottom part (65) of the spreading element, wherein the bottom part is preferably spring mounted to the intermediate part.

11. Container sleeving device (10) as claimed in any of the preceding claims, wherein the dimensions of the bottom part (65) in the plane of the flat element diminish from the flat element upward towards the intermediate part (66).

12. Container sleeving device (10) as claimed in any of the preceding claims, wherein the bottom part (65) widens in the upward direction towards the intermediate part in a direction perpendicular to the plane of the flat element and the spreading element (26) has an at least substantially constant circumference at least in the direction from the bottom part (65) to the intermediate part (66) or even to the top part (67) of the spreading element (26) and/or wherein transport elements are provided with orientation elements for orienting the spreading element (26) in the sleeving device, the orientation elements preferably comprising at least one ridge formed on the first frame rollers, which ridge engages in the upper and/or lower guide rollers.

13. Spreading unit (25) to be supported by a frame (27) in a sleeving device (10) for arranging sleeves (51) around containers (3), the spreading unit being configured to open a foil (11) transported along the spreading unit to form sleeves, **characterized by** the spreading unit comprising:
- a spreading element (26) comprising a bottom part (65) configured as a generally flat element (78), a top part (67) configured as a generally cylindrical element and an intermediate part (66) arranged between the bottom and top part;
- transport elements for transporting a supplied sleeve towards the top end of the spreading element, the transport elements comprising a set of stationary upper guide rollers (71a, 71b) and a set of lower guide rollers (72a, 72b), both the lower and upper guide rollers being arranged in the plane of the flat element of the bottom part, the upper guide rollers being located at a position above the lower guide rollers; wherein an upper and lower guide roller are positioned to receive between them a frame roller (73a, 73b) arranged to transport the foil (11) along the spreading element while supporting the spreading element in the sleeving device, wherein the lower guide rollers (72a, 72b) are resiliently mounted to the bottom part (65) and/or the intermediate part (66) so that, in an operational position, the lower guide rollers are pressed to their respective frame roller (73a, 73b).

14. Spreading unit as claimed in claim 13, wherein the lower guide rollers (72a, 72b) are configured to remove the folds formed in the flattened tubular foil material passing the lower guide rollers and/or further being defined in accordance with any of the claims 1-12.

15. Method of arranging sleeves (51) around containers (3) conveyed on a conveyor (2), the method comprising supplying foil (11) to a spreading unit (25) of a container sleeving device (10) as claimed in any of the claims 1-12, opening the foil to form a sleeve by transporting the foil upward along the outer surface of the spreading element (26) of the spreading unit and discharging the sleeve (51) upward to a container (3) passing the spreading unit (25) so as to arrange the sleeve around the container.

## Patentansprüche

1. Behälterumhüllungsvorrichtung (10) zum Anordnen von Hüllen um Behälter (3) herum, die auf einem Förderer (2) befördert werden, wobei die Hüllen aus einem abgeflachten schlauchförmigen Folienmaterial (11) ausgebildet werden, wobei die Behälterumhüllungsvorrichtung aufweist:
- eine Ausbreiteinrichtung (25), die einen Rahmen (27) und ein Ausbreitelement (26) aufweist, wobei das Ausbreitelement auf dem Rahmen gelagert ist;
- eine Folienzuführung (12) zum Zuführen von Folie an das Ausbreitelement, wobei das Ausbreitelement aufgebaut ist, um die Folie zu öffnen, um Hüllen auszubilden,
- Transportelemente zum Transportieren der Hüllen entlang des Ausbreitelements, wobei die Transportelemente aufweisen:
- einen Satz von oberen Führungsrollen (71a, 71b) und einen Satz von unteren Führungsrollen (72a, 72b),
- einen Satz von Rahmenrollen (73a, 73b), die mit dem Rahmen verbunden sind und eingerichtet sind, um die Hülle zwischen den Rahmenrollen und den Führungsrollen zu transportieren,
**dadurch gekennzeichnet, dass**
- die Transportelemente aufgebaut sind, um die Hüllen (51) entlang des Ausbreitelements (26) aufwärts zu transportieren, wobei das Ausbreitelement einen unteren Teil (65), der als ein im Allgemeinen flaches Element (78) aufgebaut ist, einen oberen Teil (67), der als ein im Allgemeinen zylindrisches Element aufgebaut ist, und einen Zwischenteil (66), der zwischen dem unteren Teil und dem oberen Teil angeordnet ist, aufweist;
- die oberen Führungsrollen (71a, 71b) ortsfeste Führungsrollen sind;
- die oberen (71a, 71b) und unteren (72a, 72b) Führungsrollen in der Ebene des flachen Elements des unteren Teils angeordnet sind, wobei die oberen Führungsrollen in einer Position oberhalb der unteren Führungsrollen angeordnet sind;
- die Rahmenrollen (73a, 73b) aufgebaut sind, um die Hülle in einer Aufwärtsrichtung zu transportieren, wobei die Rahmenrollen unterhalb der oberen Führungsrollen (71a, 71b) angeordnet sind, um das Ausbreitelement auf dem Rahmen (27) zu lagern, und die unteren Führungsrollen (71a, 71b) elastisch auf dem Ausbreitelement montiert sind, so dass die unteren Führungsrollen an ihre jeweilige Rahmenrolle (73a, 73b) gedrückt werden.

2. Behälterumhüllungsvorrichtung (10) nach Anspruch 1, wobei die unteren Führungsrollen (72a, 72b) von elastischen Elementen gelagert werden und/oder eingerichtet sind, um die Falten, die in dem abgeflachten schlauchförmigen Folienmaterial ausgebildet werden, das die unteren Führungsrollen durchläuft, zu entfernen, bevor das Folienmaterial durch die Kombination von Rahmenrollen und oberen Führungsrollen in die Aufwärtsrichtung transportiert wird, und/oder wobei die unteren Führungsrollen in Kombination mit den zugehörigen Rahmenrollen (73a, 73b) einen Druck auf die Falten des Folienmaterials ausüben.

3. Behälterumhüllungsvorrichtung (10) nach einem der vorhergehenden Ansprüche, wobei die Rahmenrollen (73a, 73b) zwischen den oberen Führungsrollen und den unteren Führungsrollen angeordnet sind, um die Bewegung des Ausbreitelements in die Aufwärts- und Abwärtsrichtung beschränken.

4. Behälterumhüllungsvorrichtung (10) nach einem der vorhergehenden Ansprüche, wobei die unteren Führungsrollen (72a, 72b) zwischen einer Betriebsposition, in der die Rollen sich von der Oberfläche des Ausbreitelements (26) erstrecken, und einer zurückgezogenen Position, in der die Rollen sich teilweise oder ganz in einer Vertiefung in dem Ausbreitelement erstrecken, beweglich sind, wobei die unteren Führungsrollen vorzugsweise innerhalb des Ausbreitelements schwenkbar montiert sind.

5. Behälterumhüllungsvorrichtung (10) nach einem der vorhergehenden Ansprüche, wobei die unteren Führungsrollen (72a, 72b) derart angeordnet sind, dass sie in der Betriebsposition gegen die Rahmenrollen (73a, 73b) vorgespannt sind, und/oder wobei die unteren Führungsrollen federmontiert sind, um die Rollen in die Betriebsposition zu drücken, und/oder wobei entgegengesetzte untere Führungsrollen an jeweiligen Schwenkarmen montiert sind, wobei die Schwenkarme vorzugsweise an einer gemeinsamen zentralen Schwenkachse montiert sind.

6. Behälterumhüllungsvorrichtung (10) nach einem der vorhergehenden Ansprüche, wobei eine obere Führungsrolle (71a, 71b) eine Schwenkachse aufweist, die an dem Ausbreitelement montiert ist, um die obere Führungsrolle schwenkbar zu lagern, und wobei eine untere Führungsrolle (72a, 72b) an einem Schwenkarm (84s, 84b) montiert ist, wobei der Schwenkarm an der Schwenkachse (85) der oberen Führungsrolle montiert ist, die vorzugsweise ein elastisches Element, zum Beispiel eine Feder, aufweist, das zwischen dem Schwenkarm und dem Ausbreitelement angeordnet ist.

7. Behälterumhüllungsvorrichtung (10) nach einem der vorhergehenden Ansprüche, wobei der untere Teil (65) von dem Zwischenteil (66) des Ausbreitelements (26) abnehmbar ist, und/oder wobei der untere Teil (65) eine Vertiefung aufweist, die aufgebaut ist, um das untere Ende des Zwischenteils (66) des Ausbreitelements (26) aufzunehmen, und/oder wobei die unteren Führungsrollen (72a, 72b) montiert sind, um sich unter dem Einfluss der Schwerkraft zu der zurückgezogenen Position zu bewegen, und/oder sich durch die Befestigung des abnehmbaren unteren Teils (65) an dem Zwischenteil (66) des Ausbreitelements von der zurückgezogenen Position zu der Betriebsposition zu bewegen.

8. Behälterumhüllungsvorrichtung (10) nach einem der vorhergehenden Ansprüche, wobei die oberen Führungsrollen(71a, 71b) eine Laufoberfläche mit einer ersten Breite aufweisen, und die unteren Führungsrollen eine Laufoberfläche mit einer zweiten Breite aufweisen, wobei entweder die zweite Breite größer als die erste Breite ist oder die erste Breite größer als die zweite Breite ist.

9. Behälterumhüllungsvorrichtung (10) nach einem der vorhergehenden Ansprüche, wobei die Transportelemente aufweisen:
- einen Satz weiterer Führungsrollen (69a, 69b), die an dem oberen Teil des Ausbreitelements (26) angeordnet sind;
- einen Satz zweiter Rahmenrollen, die an einer Position oberhalb der Position der weiteren Führungsrollen (69a, 69b) angeordnet sind, um die Hülle zwischen den zweiten Rahmenrollen und weiteren Führungsrollen anzutreiben; wobei die zweiten Rahmenrollen aufgebaut sind, um auf die weiteren Führungsrollen eine Kraft mit einer Kraftkomponente nach unten auszuüben.

10. Behälterumhüllungsvorrichtung (10) nach einem der vorhergehenden Ansprüche, wobei die oberen (71a, 71b) und unteren (72a, 72b) Führungsrollen an dem Zwischenteil des Ausbreitelements (26) angeordnet sind, oder wobei die oberen Führungsrollen an dem Zwischenteil (66) angeordnet sind und die unteren Führungsrollen an dem unteren Teil (65) angeordnet sind, oder wobei die oberen Führungsrollen und unteren Führungsrollen in dem unteren Teil (65) des Ausbreitelements angeordnet sind, wobei der untere Teil vorzugsweise an dem Zwischenteil federmontiert ist.

11. Behälterumhüllungsvorrichtung (10) nach einem der vorhergehenden Ansprüche, wobei die Abmessungen des unteren Teils (65) sich in der Ebene des flachen Elements von dem flachen Element aufwärts in Richtung des Zwischenteils (66) verkleinern.

12. Behälterumhüllungsvorrichtung (10) nach einem der vorhergehenden Ansprüche, wobei der untere Teil (65) sich in der Aufwärtsrichtung in Richtung des Zwischenteils in einer Richtung senkrecht zu der Ebene des flachen Elements aufweitet, und das Ausbreitelement (26) wenigstens in der Richtung von dem unteren Teil (65) zu dem Zwischenteil (66) oder sogar zu dem oberen Teil (67) des Ausbreitelements (26) einen wenigstens im Wesentlichen konstanten Umfang hat oder
und/oder wobei Transportelemente mit Orientierungselementen versehen sind, um das Ausbreitelement (26) in der Umhüllungsvorrichtung zu orientieren, wobei die Orientierungselemente vorzugsweise wenigstens einen Grat aufweisen, der auf den ersten Rahmenrollen ausgebildet ist, wobei der Grat in die oberen und/oder unteren Führungsrollen eingreift.

13. Ausbreiteinheit (13), die von einem Rahmen (27) in einer Umhüllungsvorrichtung (10) zum Anordnen von Hüllen um Behälter (3) herum gelagert werden soll, wobei die Ausbreiteinheit aufgebaut ist, um eine Folie (11) zu öffnen, die entlang der Ausbreiteinheit transportiert wird, um Hüllen auszubilden, **dadurch gekennzeichnet, dass** die Ausbreiteinheit aufweist:
- ein Ausbreitelement (26), das einen unteren Teil (65), der als ein im Allgemeinen flaches Element (78) aufgebaut ist, einen oberen Teil (67), der als ein im Allgemeinen zylindrisches Element aufgebaut ist, und einen zwischen dem unteren und oberen Teil angeordneten Zwischenteil (66) aufweist;
- Transportelemente zum Transportieren einer zugeführten Hülle in Richtung des oberen Endes des Ausbreitelements, wobei die Transportelemente einen Satz von ortsfesten oberen Führungsrollen (71a, 71b) und einen Satz von unteren Führungsrollen (72a, 72b) aufweisen,
wobei sowohl die unteren als auch oberen Führungsrollen in der Ebene des flachen Elements des unteren Teils angeordnet sind, wobei die oberen Führungsrollen an einer Position oberhalb der unteren Führungsrollen angeordnet sind;
wobei eine obere und untere Führungsrolle positioniert sind, um zwischen ihnen eine Rahmenrolle (73a, 73b) aufzunehmen, die eingerichtet ist, um die Folie (11) entlang des Ausbreitelements zu transportieren, während das Ausbreitelement in der Umhüllungsvorrichtung gelagert wird, wobei die unteren Führungsrollen (72a, 72b) an dem unteren Teil (65) und/oder dem Zwischenteil (66) elastisch montiert sind, so dass die unteren Führungsrollen in einer Betriebsposition an ihre jeweilige Rahmenrolle (73a, 73b) gedrückt werden.

14. Ausbreiteinheit nach Anspruch 13, wobei die unteren Führungsrollen (72a, 72b) aufgebaut sind, um die Falten, die in dem abgeflachten schlauchförmigen Folienmaterial ausgebildet werden, das die unteren Führungsrollen durchläuft, zu entfernen, und/oder ferner nach einem der Ansprüche 1 - 12 definiert sind.

15. Verfahren zum Anordnen von Hüllen (51) um Behälter (3) herum, die auf einem Förderer (2) transportiert werden, wobei das Verfahren aufweist: Zuführen von Folie (11) an eine Ausbreiteinheit (25) einer Behälterumhüllungsvorrichtung (10) nach einem der Ansprüche 1 - 12, Öffnen der Folie, um eine Hülle auszubilden, indem die Folie entlang der Außenoberfläche des Ausbreitelements (26) der Ausbreiteinheit aufwärts bewegt wird und die Hülle (51) nach oben zu einem Behälter (3) der die Ausbreiteinheit (25) durchläuft, abgegeben wird, um die Hülle um den Behälter herum anzuordnen.

## Revendications

1. Dispositif d'application de manchon sur un conteneur (10) destiné à agencer des manchons (51) autour de conteneurs (3) transférés sur un convoyeur (2), les manchons étant formés d'un matériau en feuille tubulaire aplatie (11),
le dispositif d'application de manchon sur un conteneur comprenant :
- un dispositif d'écartement (25) comprenant un bâti (27) et un élément d'écartement (26) dans lequel l'élément d'écartement est supporté sur le bâti ;
- un dispositif d'alimentation en feuilles (12) destiné à délivrer une feuille à l'élément d'écartement, l'élément d'écartement étant configuré de manière à ouvrir la feuille afin de former des manchons,
- des éléments de transport destinés à transporter les manchons le long de l'élément d'écartement, les éléments de transport comprenant :
- un jeu de rouleaux de guidage supérieurs (71a, 71b) et un jeu de rouleaux de guidage inférieurs (72a, 72b),
- un jeu de rouleaux de bâti (73a, 73b) relié au bâti et agencé de manière à transporter le manchon entre les rouleaux de bâti et les rouleaux de guidage
**caractérisé en ce que** :
- les éléments de transport sont configurés de manière à transporter les manchons (51) vers le haut le long de l'élément d'écartement (26), l'élément d'écartement comprenant une partie inférieure (65) configurée comme un élément sensiblement plat (78), une partie supérieure (67) configurée comme un élément sensiblement cylindrique et une partie intermédiaire (66) agencée entre la partie inférieure et la partie supérieure ;
- les rouleaux de guidage supérieurs (71a, 71b) sont des rouleaux de guidage fixes ;
- les rouleaux de guidage supérieurs (71a, 71b) et inférieurs (72a, 72b) sont agencés dans le plan de l'élément plat de la partie inférieure, les rouleaux de guidage supérieurs étant situés à une position au-dessus des rouleaux de guidage inférieurs ;
- les rouleaux de bâti (73a, 73b) sont configurés de manière à transporter le manchon dans la direction verticale, dans lequel les rouleaux de bâti sont agencés au-dessous des rouleaux de guidage supérieurs (71a, 71b) afin de supporter l'élément d'écartement sur le bâti (27) et les rouleaux de guidage inférieurs (72a, 72b) sont montés de manière élastique sur l'élément d'écartement de telle sorte que les rouleaux de guidage inférieurs sont pressés vers leur rouleau de bâti respectif (73a, 73b).

2. Dispositif d'application de manchon sur un conteneur (10) selon la revendication 1, dans lequel les rouleaux de guidage inférieurs (72a, 72b) sont supportés par des éléments élastiques et/ou sont agencés afin d'éliminer les plis formés sur le matériau en feuille tubulaire aplatie passant sur les rouleaux de guidage inférieurs avant que le matériau en feuille soit transporté par l'association de rouleaux de bâti et de rouleaux de guidage supérieurs dans la direction ascendante et/ou dans lequel les rouleaux de guidage inférieurs en association avec les rouleaux de bâti (73a, 73b) associés exercent une pression sur les plis du matériau en feuille.

3. Dispositif d'application de manchon sur un conteneur (10) selon l'une quelconque des revendications précédentes, dans lequel les rouleaux de bâti (73a, 73b) sont agencés entre les rouleaux de guidage supérieurs et les rouleaux de guidage inférieurs afin de limiter le mouvement de l'élément d'écartement vers le haut et vers le bas.

4. Dispositif d'application de manchon sur un conteneur (10) selon l'une quelconque des revendications précédentes, dans lequel les rouleaux de guidage inférieurs (72a, 72b) peuvent être déplacés entre une position opérationnelle dans laquelle les rouleaux s'étendent à partir de la surface de l'élément d'écartement (26) et une position rétractée dans laquelle des rouleaux s'étendent partiellement ou totalement dans une cavité dans l'élément d'écartement, dans lequel les rouleaux de guidage inférieurs sont, de préférence, montés de manière à pouvoir pivoter à l'intérieur de l'élément d'écartement.

5. Dispositif d'application de manchon sur un conteneur (10) selon l'une quelconque des revendications précédentes, dans lequel les rouleaux de guidage inférieurs (72a, 72b) sont agencés de manière à être appliqués contre les rouleaux de bâti (73a, 73b) dans la position opérationnelle et/ou
dans lequel les rouleaux de guidage inférieurs sont montés sur ressort afin d'appliquer les rouleaux vers la position opérationnelle et/ou dans lequel des rouleaux de guidage inférieurs opposés sont montés sur des bras de pivot respectifs, les bras de pivot étant, de préférence, montés sur un axe de pivot central commun.

6. Dispositif d'application de manchon sur un conteneur (10) selon l'une quelconque des revendications précédentes, dans lequel un rouleau de guidage supérieur (71a, 71b) comprend un axe de pivot monté sur l'élément d'écartement afin de supporter le rouleau de guidage supérieur de manière à pouvoir pivoter et dans lequel un rouleau de guidage inférieur (72a, 72b) est monté sur un bras de pivot (84a, 84b),
le bras de pivot étant monté sur l'axe de pivot (85) du rouleau de guidage supérieur, comprenant, de préférence, un élément élastique, par exemple un ressort, agencé entre le bras de pivot et l'élément d'écartement.

7. Dispositif d'application de manchon sur un conteneur (10) selon l'une quelconque des revendications précédentes, dans lequel la partie de fond (65) peut être séparée de la partie intermédiaire (66) de l'élément d'écartement (26) et/ou dans lequel la partie inférieure (65) comprend une cavité configurée de manière à recevoir l'extrémité inférieure de la partie intermédiaire (66) de l'élément d'écartement (26) et/ou dans lequel les rouleaux de guidage inférieurs (72a, 72b) sont montés afin de se déplacer vers la position rétractée sous l'influence de la gravité et/ou de se déplacer de la position rétractée vers la position opérationnelle par fixation de la partie inférieure amovible (65) sur la partie intermédiaire (66) de l'élément d'écartement.

8. Dispositif d'application de manchon sur un conteneur (10) selon l'une quelconque des revendications précédentes, les rouleaux de guidage supérieurs (71a, 71b) comprenant une surface utile présentant une première largeur et des rouleaux de guidage inférieurs comprenant une surface utile présentant une seconde largeur, dans lequel soit la seconde largeur est supérieure à la première largeur soit la première largeur est supérieure à la seconde largeur.

9. Dispositif d'application de manchon sur un conteneur (10) selon l'une quelconque des revendications précédentes, dans lequel les éléments de transport comprennent :
- un jeu d'autres rouleaux de guidage (69a, 69b), agencé au niveau de la partie supérieure de l'élément d'écartement (26) ;
- un jeu de second rouleaux de bâti, agencé au niveau d'une position au-dessus de la position des rouleaux de guidage (69a, 69b) de manière à entraîner le manchon entre les seconds rouleaux de bâti et d'autres rouleaux de guidage ; dans lequel les seconds rouleaux de bâti sont configurés de manière à exercer sur les autres rouleaux de guidage un effort présentant une composante d'effort descendante.

10. Dispositif d'application de manchon sur un conteneur (10) selon l'une quelconque des revendications précédentes, dans lequel les rouleaux de guidage supérieurs (71a, 71b) et inférieurs (72a, 72b) sont agencés au niveau de la partie intermédiaire (66) de l'élément d'écartement (26), ou dans lequel les rouleaux de guidage supérieurs sont agencés au niveau de la partie intermédiaire (66) et les rouleaux de guidage inférieurs sont agencés au niveau de la partie inférieure (65) ou dans lequel les rouleaux de guidage supérieurs et les rouleaux de guidage inférieurs sont agencés sur la partie inférieure (65) de l'élément d'écartement, dans lequel la partie inférieure est, de préférence, fixée sur ressort à la partie intermédiaire.

11. Dispositif d'application de manchon sur un conteneur (10) selon l'une quelconque des revendications précédentes, dans lequel les dimensions de la partie inférieure (65) dans le plan de l'élément plat diminuent à partir de l'élément plat vers le haut, vers la partie intermédiaire (66).

12. Dispositif d'application de manchon sur un conteneur (10) selon l'une quelconque des revendications précédentes, dans lequel la partie inférieure (65) s'élargit vers le haut vers la partie intermédiaire dans une direction perpendiculaire au plan de l'élément plat et l'élément d'écartement (26) présente une circonférence au moins sensiblement constante, au moins dans la direction s'étendant de la partie inférieure (65) vers la partie intermédiaire (66) ou même vers la partie supérieure (67) de l'élément d'écartement (26) et/ou dans lequel des éléments de transport comportent des éléments d'orientation destinés à orienter l'élément d'écartement (26) dans le dispositif d'application de manchon, les éléments d'orientation comprenant, de préférence, au moins une nervure formée sur les premiers rouleaux de bâti, laquelle nervure est couplée aux rouleaux de guidage supérieurs et/ou inférieurs.

13. Unité d'extension (25) destinée à être supportée par un bâti (27) sur un dispositif d'application de manchon (10) afin d'agencer des manchons (51) autour de conteneurs (3), l'unité d'écartement étant configurée de manière à ouvrir une feuille (11) transportée le long de l'unité d'écartement afin de former des manchons, **caractérisée par le fait que** l'unité d'écartement comprend :
un élément d'écartement (26) comprenant une partie inférieure (65) configurée comme un élément sensiblement plat (78), une partie supérieure (67) configurée comme un élément sensiblement cylindrique et une partie intermédiaire (66) agencée entre les parties inférieure et supérieure ;
des éléments de transport destinés à transporter un manchon délivré vers l'extrémité supérieure de l'élément d'écartement, les éléments de transport comprenant un jeu de rouleaux de guidage supérieurs fixes (71a, 71b) et un jeu de rouleaux de guidage inférieurs (72a, 72b),
à la fois les rouleaux de guidage inférieurs et supérieurs étant agencés sur le plan de l'élément plat de la partie inférieure, les rouleaux de guidage supérieurs étant situés à une position au-dessus des rouleaux de guidage inférieurs ;
dans lequel des rouleaux de guidage supérieur et inférieur sont positionnés afin de recevoir entre eux un rouleau de bâti (73a, 73b) agencé afin de transporter la feuille (11) le long de l'élément d'écartement tout en supportant l'élément d'écartement dans le dispositif d'application de manchon, dans lequel les rouleaux de guidage inférieurs (72a, 72b) sont montés de manière élastique sur la partie inférieure (65) et/ou la partie intermédiaire (66) de telle sorte que, dans une position opérationnelle, les rouleaux de guidage inférieurs sont pressés vers leurs rouleaux de bâti respectifs (73a, 73b).

14. Unité d'extension selon la revendication 13, dans lequel les rouleaux de guidage inférieurs (72a, 72b) sont configurés de manière à éliminer les plis formés sur le matériau en feuille tubulaire aplatie passant sur les rouleaux de guidage inférieurs et/ou définis en outre selon l'une quelconque des revendications 1 à 12.

15. Procédé d'agencement de manchons (51) autour de conteneurs (3) transférés sur un convoyeur (2), le procédé comprenant la fourniture de feuille (11) à une unité d'écartement (25) d'un dispositif d'application de manchon sur un conteneur (10) selon l'une quelconque des revendications 1 à 12, l'ouverture de la feuille afin de former un manchon par transport de la feuille vers le haut le long de la surface externe de l'élément d'écartement (26) de l'unité d'écartement et le déchargement du manchon (51) vers le haut, vers un conteneur (3) passant par l'unité d'écartement (25) de manière à agencer le manchon autour du conteneur.
